# EUROPEAN PATENT SPECIFICATION

(11) **EP 3 433 504 B1**
(45) Date of publication and mention of the grant of the patent: **26.08.2020**
(21) Application number: 17717819.1
(22) Date of filing: 22.03.2017
(51) Int. Cl.: F16C 33/66, F16C 35/063, F16C 35/067, B33Y 80/00

(54) **BEARING-SUPPORT HOUSING/SHAFT**
LAGERTRÄGERGEHÄUSE/-WELLE
LOGEMENT/ARBRE DE SUPPORT DE PALIER

(30) Priority: 22.03.2016 GB 201604863
(43) Date of publication of application: 30.01.2019
(73) Proprietor: ESR Technology Limited, Birchwood Park, Warrington WA3 6WU (GB)
(72) Inventor: MUNRO, Grant, Warrington WA3 6WU (GB)
(74) Representative: Mansfield, Peter Turquand
(86) International application number: PCT/GB2017/050813
(87) International publication number: WO 2017/163070

(56) References cited:
- EP-A1- 2 554 865
- EP-A1- 2 886 318
- EP-A2- 0 655 562
- DE-A1- 3 008 636
- DE-A1-102014 216 313
- GB-A- 2 521 397
- JP-A- 2005 188 756
- JP-A- 2009 030 780
- JP-A- 2014 152 873
- US-A1- 2005 133 466
- US-A1- 2016 074 940

## Description

The present invention relates to a housing to support a ball bearing or like rolling-element bearing, and/or a shaft passing through such a roller-element bearing.

Rolling element bearings are conventionally mounted between a shaft and a housing to allow low friction relative rotation with limited axial and radial movement of these parts. Either the shaft or housing may be the rotating part while the other remains fixed to a static local structure. Such machine elements rely on effective lubrication in order to function over a long life. In some cases the operational life may be reduced due to insufficient lubricant near to the tribological contact surfaces. This may be due to loss of the lubricating medium, typically oil, to the external environment through creep or evaporation, or it may be the result of degradation of the constituents of the lubricant through use. This is particularly problematic in applications where opportunities for maintenance are limited or impossible.

US 2016/0074940 relates to a way of removing powder from an internal cavity in a housing made by 3-D printing and discloses the preamble of claim 1. GB 2 521 397 relates to using 3-D printing to make a housing including internal cavities which may have internal structures to reduce weight. DE 30 08 636 relates to a roller bearing with lubricant provided in a cylindrical cavity having a number of bungs that can be inserted successively into the cavity to push out a predetermined volume of lubricant. EP 2 554 865 relates to a roller bearing with an inner race spacer of sintered metal acting as an oil reservoir.

According to the present invention there is provided a housing for at least one bearing, the housing defining a location for each bearing, and/or a shaft adapted to extend through such a bearing, so the bearing would be at a predetermined location on the shaft, wherein the housing and/or the shaft also defines an internal reservoir cavity and a communication path to enable a lubricant from the internal reservoir cavity to reach the or each bearing, and being produced as a single integral item using an additive manufacturing process.

If such an internal reservoir cavity is provided in the housing, the housing acts as a conventional housing in that it bears against each bearing, but it contains an internal cavity which can act as a reservoir for a lubricant, which is then available to maintain appropriate quantities of lubricant within each bearing. This replaces lubricant that is either lost or degraded within each bearing.

If such an internal reservoir cavity is provided in the shaft, the shaft acts as a conventional shaft, and bears against each bearing, but it contains an internal cavity which can act as a reservoir for a lubricant, which is then available to maintain appropriate quantities of lubricant within each bearing. This replaces lubricant that is either lost or degraded within each bearing.

In either case the internal reservoir includes internal structures to inhibit rapid redistribution of the liquid lubricant.

The present invention enables more effective lubrication of bearing components to be provided over an extended duration, and is particularly useful in demanding environments such as in space satellites, where there may also be additional constraints on mass and/or structural integrity. It is clearly particularly useful in situations where there are restrictions on performing maintenance, for example where maintenance can only be performed at very long intervals, or is not possible.

Preferably, the housing is designed so that it is structurally efficient. It may define a variety of features such as precision bearing-mounting seats, in addition to the lubricating cavity, within a single item. Preferably, it also provides fastening features for the retention of the bearings in the housing, or for fixing the housing to adjacent components so that it fulfils its role as a structural component within a wider system. The housing preferably is arranged to define an inlet means such that any powder trapped within the structure as a result of the manufacturing process can be flushed out, and this inlet means could also provide a means of filling the reservoir cavity prior to use.

In a preferred embodiment, the housing defines a plurality of integral feet for fastening the housing to an adjacent structure. These integral feet may be defined at one end of the housing, or at an intermediate position along the length of the housing. For example there may be three or four such integral feet.

The internal structures within the reservoir cavity is in the form of a mesh or labyrinthine structure or other porous structure, such that it provides a large surface area. The porosity and the size of pores vary between different portions of the porous structure, to passively prevent rapid loss of lubricant from the reservoir cavity. Preferably, if there are a plurality of bearings, the housing defines separate reservoir cavities for each bearing, so that a predetermined volume of lubricant may be provided independently for each bearing. Preferably, the housing is also arranged to inhibit migration of oil away from the bearings due to capillary action and, as such, the desired properties in these respects may be optimised for the particular environment in which the bearings are being employed. The invention may also be employed within a pumped system, whereby an additional quantity of oil may be introduced periodically for gradual distribution within the bearing system over a period of time.

In one embodiment the housing defines a cylindrical duct with a bore through which a shaft may freely extend, and defines two seats to locate bearings to support the shaft, one such seat at each end of the cylindrical duct, and at least one reservoir cavity is defined within the wall of the cylindrical duct between the bearing-locating seats. Preferably the porous structures within the cavity extend to an aperture at the inner surface of the cylindrical duct, so lubricant can migrate over the surface of the porous structure to reach the inner surface of the cylindrical duct. By way of example there may be two reservoir cavities, each being intended in use to provide lubricant to one of the bearings. Each such reservoir cavity may be of annular form within the wall of the cylindrical duct, so it surrounds the bore. Alternatively there may be a plurality of reservoir cavities which provide lubricant to one and the same bearing, each of which may for example be in the form of a segment of an annulus, or any other convenient shape that can fit within the wall of the cylindrical duct. Each such reservoir cavity communicates with an aperture at the inner surface of the cylindrical duct, and preferably arranged to distribute lubricant all around the cylindrical surface of the bore. For example in the case of a single reservoir cavity of annular form, the cavity may communicate with a single aperture extending right round the cylindrical surface of the bore.

The size of the pores within the porous material in the reservoir cavity may for example be larger in a portion closer to the aperture, and smaller in a portion further from the aperture. The pores may vary in size between for example 10 µm and 2 mm, more preferably between 40 µm and 1 mm. During operation oil or other fluid lubricant creeps over the surfaces of the porous material, and then creeps over the surfaces within the bore, to reach the surfaces within a bearing.

The housing may be provided with a coating on at least part of the surface of the bore, the coating altering the surface energy so as to repel oil, so the coating can act as an anti-creep barrier to inhibit creep of lubricant over that part of the surface of the bore. For example such an anti-creep barrier may be arranged right around the cylindrical surface of the bore between apertures communicating with different reservoir cavities, the anti-creep barrier hence ensuring that each aperture and so each reservoir cavity communicates with only one end of the cylindrical duct, and so with only one bearing.

In the case that at least one internal reservoir cavity is provided in the shaft, the operation is substantially the same. Each such reservoir cavity communicates with an aperture at the outer surface of the shaft, and preferably arranged to distribute lubricant all around the cylindrical surface of the shaft. For example in the case of a single reservoir cavity of annular form, the cavity may communicate with a single aperture extending right round the cylindrical surface of the shaft, or with multiple apertures spaced around the shaft. And at least part of the surface of the shaft may be provided with a coating to alter the surface energy and so act as an anti-creep barrier.

The size of the pores within the porous material in the reservoir cavity may for example be larger in a portion closer to the aperture, and smaller in a portion further from the aperture. The pores may vary in size between for example 10 µm and 2 mm, more preferably between 40 µm and 1 mm. During operation oil or other fluid lubricant creeps over the surfaces of the porous material, and then creeps over the surface of the shaft, to reach the surfaces within a bearing.

The shaft may be provided with a coating on at least part of the surface of the shaft, the coating altering the surface energy so as to repel oil, so the coating can act as an anti-creep barrier to inhibit creep of lubricant over that part of the surface of the shaft. For example such an anti-creep barrier may be arranged right around the cylindrical surface of the shaft between apertures communicating with different reservoir cavities, the anti-creep barrier hence ensuring that each aperture and so each reservoir cavity communicates with only one bearing.

The invention will now be further and more particularly described, by way of example only, and with reference to the accompanying drawings in which:

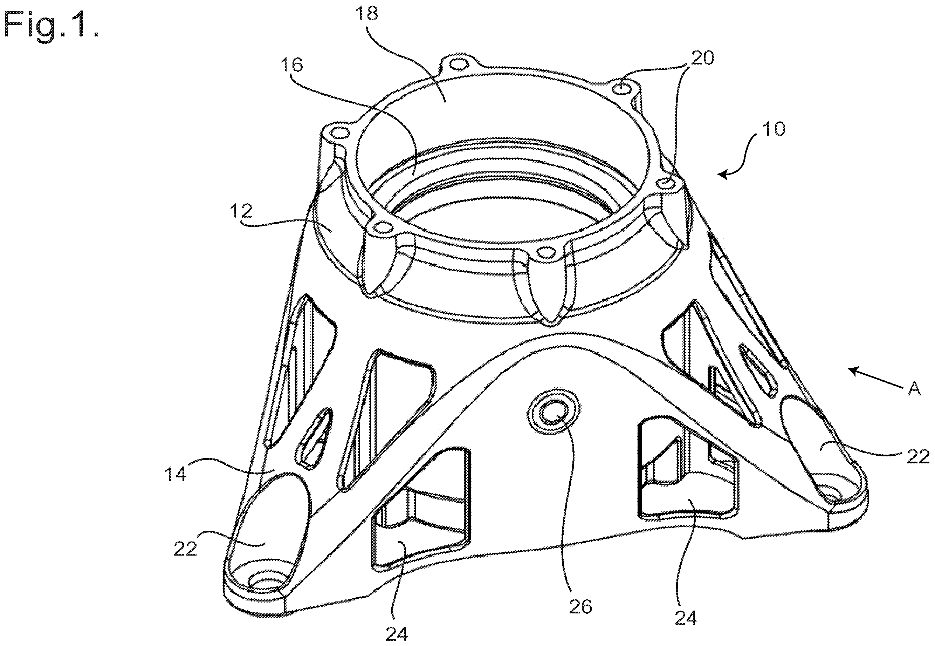

Figure 1 shows a perspective view of a housing of the invention;

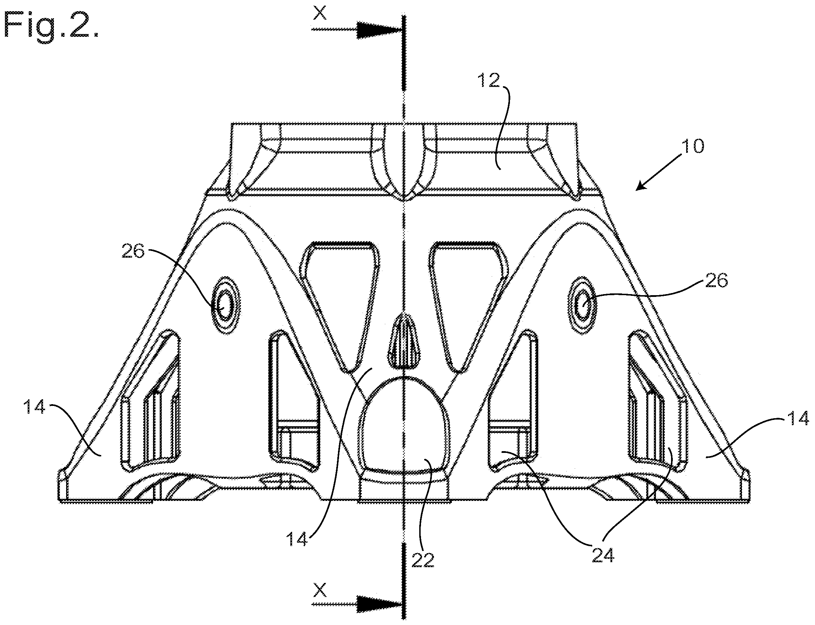

Figure 2 shows a view in the direction of arrow A of figure 1;
Figure 3 shows a longitudinal sectional view on the line X-X of figure 2; and
Figure 4 shows a view equivalent to that of figure 3, showing also a shaft.

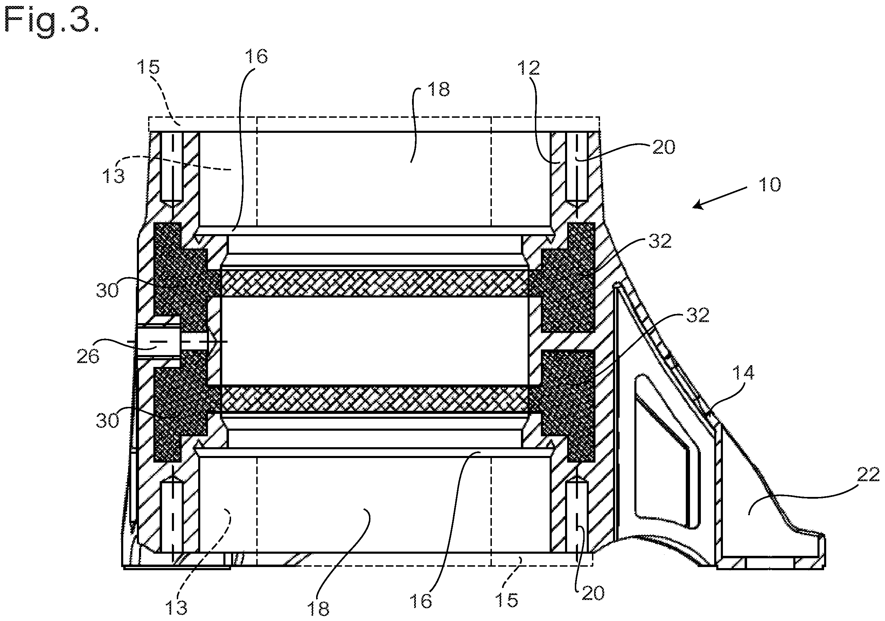

Referring to the drawings, a housing 10 comprises a cylindrical tubular structure 12 to house two rolling-element bearings 13 (shown in broken lines in figure 3), and three structural abutments 14 for attaching the housing 10 to a local structure. The cylindrical tubular structure 12 defines at each end precision machined axial seating faces 16 and precision bores 18 for locating the two rolling-element bearings 13, and these axial seating faces 16 and precision bores 18 constrain the bearing 13 in the axial and radial directions. Each end face of the housing 10 incorporates six screw holes 20 for attachment of a retaining ring 15 (shown in broken lines in figure 3) to secure the bearing 13 against the seating face 16. The three abutments 14, which form an external mounting interface of the housing 10, incorporate a recess 22 for fitting a fastener, and there are apertures 24 in the thin wall of these abutments 14 to achieve weight savings for mass-critical applications.

Internal to the cylindrical tubular structure 12 (see in particular figure 3) are two cavities 30 occupied by a porous or mesh structure 32, which have been created using an additive layer (or "3-D printing") manufacturing process. These cavities 30, which in use act as reservoirs for a lubricating fluid, are enclosed within the solid wall of the structure 12, except for filling holes 26 at the outside surface and an aperture at the inner surface of the tubular structure 12, and the porous or mesh structure 32 extends to the inner surface of the tubular structure 12.

The production process may be described as a three-dimensional printing process from a powder. The powder may be a metal powder. In one example the housing 10 is produced by direct metal laser sintering. This process involves fusing together of very fine layers of metal powder using a focused laser beam. The powder may be deposited in layers of between 20 and 60 µm, and each layer is then scanned with a high intensity laser beam so that the particles within the layer fuse together, and the layer fuses to the layer below. This direct metal laser sintering process involves gradually and repeatedly lowering a piston or support plate on which is repeatedly placed a thin layer of a powder of material, and scanning with a laser those portions of the layer of powder which are to be sintered together. After scanning the selected parts of each layer, the powder bed is lowered by one layer thickness, and the process repeated. Preferably the entire bed of powder is warmed up to slightly below the temperature required for sintering, so that the power required by the laser is reduced. This process is substantially identical to those referred to as selective laser metal sintering, or selective laser metal melting. An equivalent process, which may also be suitable, is electron beam melting.

After performing the sintering as described above, the housing is separated from the remaining powder. The resulting housing 10 is single integral structure, with no joints.

All the components of the housing 10, that is to say the cylindrical tubular structure 12, the abutments 14, and the porous or mesh structure 32 in the cavities 30, are integral, having been made as a single near net shape component of metal (such as titanium) using an additive manufacturing process as described above. This would typically be followed by a finishing machining step to achieve the necessary dimensional tolerances and surface finishes for the bearing-fitting or bolted interfaces. Prior to this finishing machining step, it may also be appropriate to perform heat treatment, to achieve the required material properties. It may also be advantageous additionally to incorporate in the near net shape component temporary features for the purposes of the finishing machining step, which are subsequently removed before use of the housing 10.

During the manufacturing process, the filling holes 26 allow any powder left over from the manufacturing process to be flushed out. The filling holes 26 in this embodiment are arranged such that both reservoir cavities 30 can be filled during the same operation; once the cavities 30 have been filled with a fluid lubricant they are then sealed by inserting sealing screws (not shown) into each of the filling holes 26. Thus, in use, the only exit path for lubricant from the reservoir cavities 30 is into the bore of the cylindrical tubular structure 12 and so into the bearings 13.

The density of the mesh or porous structure 32 within the cavities 30 can be controlled during the manufacturing process to achieve a density and pore size appropriate to the application. The structure 32 may define labyrinthine paths.

The bore of the cylindrical tubular structure 12 may be provided with anti-creep barrier, by coating the surface with a material which changes the surface energy, so as to provide further control of the lubricant migration over the surfaces of the housing 10. Such an anti-creep barrier may for example be provided all around the portion of the bore between the two apertures.

The housing 10 as shown would typically be assembled with a pair of angular contact bearings 13 clamped in place and with a rotary shaft (not shown) mounted within the bearings 13. The shaft may then have other rotating parts fastened to it.

It will be appreciated that the housing 10 described above is by way of example only, and that it may be modified in many ways while remaining within the scope of the present invention, which is defined by the claims. For example there may be a different internal fluid retaining structure within the cavities 30 or a different number of flushing and filling holes 26. In a further modification, instead of the annular reservoir chambers 30, a housing may instead define a number of discrete cavities spaced around the bore, although this would mean that each such cavity would need to be filled with lubricant separately. As described above the housing 10 incorporates three structural abutments 14 at one end for attaching the housing 10 to a local structure, but instead the housing 10 might incorporate a different number of such structural abutments 14, and the abutments might be in a different position, for example halfway along the cylindrical tubular structure 12.

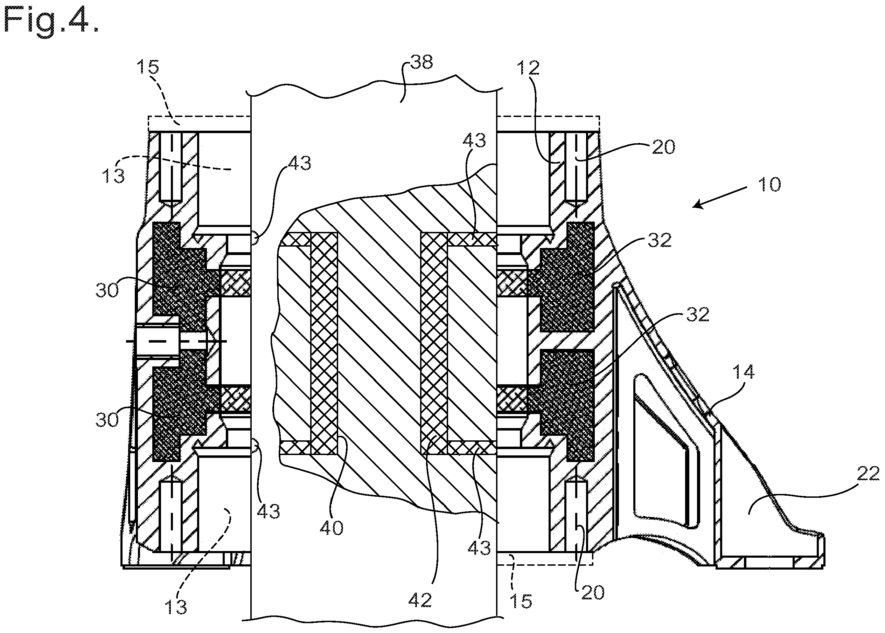

Referring now to figure 4, this shows a shaft 38 extending through the housing 10. Although the housing 10 can be used with a conventional shaft, in this example the shaft 38 also defines an internal annular cavity 40 which communicates at each end with fifteen radial apertures 43 equally spaced around the circumference of the shaft 38. The space within the annular cavity 40 and the radial apertures 43 is occupied by a porous or mesh structure 42 which has been created by an additive layer (or "3-D printing") manufacturing process, so the porous or mesh structure 42 extends to the surface of the shaft 38. The cavity 40 in use acts as a reservoir for a lubricating fluid, which gradually creeps out through the apertures 43 to the surface of the shaft 38, and so to the bearings 13.

It will be appreciated that the shaft 38 may be made in substantially the same way as described above. In this case the flushing out of any particular material can be achieved by passing air into the apertures 43 at one end, to emerge through the apertures 43 at the opposite end; and subsequently the lubricant can be introduced in a similar fashion. The shaft 38 may be of a suitable metal material such as steel or titanium; and it will be appreciated that it may be connected to a conventional shaft by means of flanges (not shown).

Although the shaft 38 may, as shown in figure 4, be used in conjunction with a housing 10 that incorporates an internal reservoir for lubricant, it will be appreciated that instead the shaft 38 might be used with a more conventional housing that does not include any lubricant reservoir.

The housing 10 and the shaft 38 as described above may be used as part of a spacecraft bearing assembly, where lubricant management is required over a long duration. It should be appreciated that it may alternatively be used in a wide range of different applications, in particular applications in which long life of bearings is required, or where environmental or operational constraints demand that supplementary lubricant may be required over a period of time.

## Claims

1. A housing (10) for at least one bearing (13), the housing defining a location (16) for each bearing, and/or a shaft (38)) adapted to extend through the at least one bearing, so the bearing would be at a predetermined location on the shaft, wherein the housing (10) and/or the shaft (38) also defines an internal reservoir cavity (30; 40) including a communication path (43) comprising an aperture to enable a lubricant from the internal reservoir cavity (30; 40) to reach the at least one bearing (13), and being produced as a single integral item using an additive manufacturing process,
**characterized in that** the internal reservoir cavity (30; 40) includes internal structures (32) to inhibit rapid redistribution of a liquid lubricant, the internal structures being a mesh or labyrinthine structure or other porous structure, to provide a large surface area, and wherein the porous structure (32; 42) within each internal reservoir cavity (30; 40) has a porosity and/or a pore size that varies between different portions of the porous structure (32; 42).

2. A housing (10) and/or a shaft (38) as claimed in claim 1 wherein the size of the pores within the porous material (32; 42) in the reservoir cavity (30; 40) is larger in a portion closer to the aperture, and smaller in a portion further from the aperture.

3. A housing and/or a shaft as claimed in claim 1 or claim 2 wherein the pores are of size between 10 µm and 2 mm.

4. A housing as claimed in any one of the preceding claims wherein the housing (10) defines a cylindrical duct (12) with a bore through which a shaft may freely extend, and defines at least one seat (16) to locate a bearing (13) within the cylindrical duct (12), wherein at least one reservoir cavity (30) is defined within the wall of the cylindrical duct (12), and wherein the communication path is provided by an aperture communicating between the reservoir cavity (30) and the bore of the cylindrical duct (12).

5. A housing as claimed in claim 4 wherein the internal cavity (30) includes internal structures (32) to inhibit rapid redistribution of a liquid lubricant, and those internal structures (32) extend to the aperture at the bore of the cylindrical duct (12).

6. A housing as claimed in claim 5 wherein the cylindrical duct defines two bearing-locating seats (16) adjacent to opposite ends of the cylindrical duct (12), and each internal reservoir cavity (30) communicates through an aperture with the bore between the bearing-locating seats (16).

7. A housing as claimed in any one of claims 4 to 6 wherein each such reservoir cavity (30) is of annular form within the wall of the cylindrical duct (12), so it surrounds the bore and communicates with a single aperture extending right round the cylindrical surface of the bore.

8. A housing as claimed in any one of claims 4 to 7 also provided with a coating on at least part of the surface of the bore, the coating altering the surface energy so as to repel oil, so the coating can act as an anti-creep barrier to inhibit creep of lubricant over that part of the surface of the bore.

9. A housing as claimed in any one of claims 4 to 8 that defines a precision bearing-mounting seat (16) for each bearing (13).

10. A housing as claimed in any one of the preceding claims also defining fastening features (20) for the retention of each bearing (13) in the housing (10).

11. A housing as claimed in any one of the preceding claims also defining fastening abutments (14) for fixing the housing (10) to adjacent components.

12. A housing as claimed in any one of the preceding claims wherein each reservoir cavity (30) is also provided with an inlet means (26).

13. A shaft (38) as claimed in any one of claims 1 to 3 also provided with a coating on at least part of the surface of the shaft, the coating altering the surface energy so as to repel oil, so the coating can act as an anti-creep barrier to inhibit creep of lubricant over that part of the surface of the shaft (38).

## Patentansprüche

1. Gehäuse (10) für mindestens ein Lager (13), wobei das Gehäuse eine Stelle (16) für jedes Lager definiert, und/oder Welle (38), die angepasst ist, sich durch das mindestens eine Lager zu erstrecken, sodass sich das Lager an einer vorher festgelegten Stelle auf der Welle befindet, wobei das Gehäuse (10) und/oder die Welle (38) außerdem einen internen Reservoirhohlraum (30; 40) definieren, beinhaltend einen Kommunikationsweg (43), umfassend eine Öffnung, um zu ermöglichen, dass ein Schmiermittel aus dem internen Reservoirhohlraum (30; 40) das mindestens eine Lager (13) erreicht, und hergestellt als einzelner einstückiger Artikel unter Verwendung eines additiven Fertigungsprozesses, **dadurch gekennzeichnet, dass** der interne Reservoirhohlraum (30; 40) interne Strukturen (32) beinhaltet, um eine schnelle Umverteilung eines flüssigen Schmiermittels zu hemmen, wobei die internen Strukturen eine Gitter- oder Labyrinthstruktur oder andere poröse Struktur sind, um einen großen Oberflächenbereich bereitzustellen, und wobei die poröse Struktur (32; 42) innerhalb von jedem internen Reservoirhohlraum (30; 40) eine Porösität und/oder eine Porengröße aufweist, die zwischen unterschiedlichen Abschnitten der porösen Struktur (32; 42) variieren.

2. Gehäuse (10) und/oder Welle (38) gemäß Anspruch 1, wobei die Größe der Poren innerhalb des porösen Materials (32; 42) im Reservoirhohlraum (30; 40) in einem näher an der Öffnung liegenden Abschnitt größer ist und in einem von der Öffnung weiter entfernt liegenden Abschnitt kleiner ist.

3. Gehäuse (10) und/oder Welle (38) gemäß Anspruch 1 oder Anspruch 2, wobei die Poren eine Größe zwischen 10 µm und 2 mm aufweisen.

4. Gehäuse gemäß einem der vorhergehenden Ansprüche, wobei das Gehäuse (10) einen zylindrischen Kanal (12) mit einer Bohrung definiert, durch den sich eine Welle ungehindert erstrecken kann, und mindestens einen Sitz (16) definiert, um ein Lager (13) innerhalb des zylindrischen Kanals (12) aufzunehmen, wobei mindestens ein Reservoirhohlraum (30) innerhalb der Wand des zylindrischen Kanals (12) definiert ist und wobei der Kommunikationsweg durch eine Öffnung bereitgestellt wird, die zwischen dem Reservoirhohlraum (30) und der Bohrung des zylindrischen Kanals (12) kommuniziert.

5. Gehäuse gemäß Anspruch 4, wobei der interne Reservoirhohlraum (30) interne Strukturen (32) beinhaltet, um eine schnelle Umverteilung eines flüssigen Schmiermittels zu hemmen, und sich diese internen Strukturen (32) an der Bohrung des zylindrischen Kanals (12) zur Öffnung erstrecken.

6. Gehäuse gemäß Anspruch 5, wobei der zylindrische Kanal zwei Lager-Aufnahmesitze (16) angrenzend an entgegengesetzten Enden des zylindrischen Kanals (12) definiert und jeder interne Reservoirhohlraum (30) über eine Öffnung mit der Bohrung zwischen den Lager-Aufnahmesitzen (16) kommuniziert.

7. Gehäuse gemäß einem der Ansprüche 4 bis 6, wobei jeder derartige Reservoirhohlraum (30) eine ringförmige Form innerhalb der Wand des zylindrischen Kanals (12) aufweist, sodass er die Bohrung umgibt und mit einer einzelnen Öffnung kommuniziert, die sich rund um die zylindrische Oberfläche der Bohrung erstreckt.

8. Gehäuse gemäß einem der Ansprüche 4 bis 7, das außerdem mit einer Beschichtung auf mindestens einem Teil der Oberfläche der Bohrung bereitgestellt wird, wobei die Beschichtung die Oberflächenenergie ändert, um Öl abzuweisen, sodass die Beschichtung als Antikriechbarriere wirken kann, um ein Kriechen von Schmiermittel über diesen Teil der Oberfläche der Bohrung zu hemmen.

9. Gehäuse gemäß einem der Ansprüche 4 bis 8, das einen Präzisions-Lager-Montagesitz (16) für jedes Lager (13) definiert.

10. Gehäuse gemäß einem der vorhergehenden Ansprüche, das außerdem Befestigungsmerkmale (20) zur Arretierung von jedem Lager (13) im Gehäuse (10) definiert.

11. Gehäuse gemäß einem der vorhergehenden Ansprüche, das außerdem Befestigungsanschläge (14) zum Fixieren des Gehäuses (10) an angrenzenden Komponenten definiert.

12. Gehäuse gemäß einem der vorhergehenden Ansprüche, wobei jeder Reservoirhohlraum (30) außerdem mit einem Einlassmittel (26) bereitgestellt wird.

13. Welle (38) gemäß einem der Ansprüche 1 bis 3, die außerdem mit einer Beschichtung auf mindestens einem Teil der Oberfläche der Welle bereitgestellt wird, wobei die Beschichtung die Oberflächenenergie ändert, um Öl abzuweisen, sodass die Beschichtung als Antikriechbarriere wirken kann, um ein Kriechen von Schmiermittel über diesen Teil der Oberfläche der Welle (38) zu hemmen.

## Revendications

1. Logement (10) pour au moins un palier (13), le logement définissant un emplacement (16) pour chaque palier, et/ou un arbre (38) conçu pour s'étendre à travers l'au moins un palier, de sorte que le palier serait au niveau d'un emplacement prédéterminé sur l'arbre, dans lequel le logement (10) et/ou l'arbre (38) définissent aussi une cavité de réservoir interne (30 ; 40) incluant une voie de communication (43) comprenant une ouverture pour permettre qu'un lubrifiant provenant de la cavité de réservoir interne (30 ; 40) atteigne l'au moins un palier (13), et étant produite comme un article unique d'un seul tenant en utilisant un processus de fabrication additif, **caractérisé en ce que** la cavité de réservoir interne (30 ; 40) inclut des structures internes (32) pour inhiber la redistribution rapide d'un lubrifiant liquide, les structures internes étant une structure de maille ou de labyrinthe ou une autre structure poreuse, pour fournir une grande superficie, et dans lequel la structure poreuse (32 ; 42) au sein de chaque cavité de réservoir interne (30 ; 40) a une porosité et/ou une taille de pores qui varient entre différentes parties de la structure poreuse (32 ; 42).

2. Logement (10) et/ou un arbre (38) selon la revendication 1 dans lesquels la dimension des pores au sein du matériau poreux (32 ; 42) dans la cavité de réservoir (30 ; 40) est plus grande dans une partie plus proche de l'ouverture, et plus petite dans une partie plus éloignée de l'ouverture.

3. Logement (10) et/ou un arbre (38) selon la revendication 1 ou la revendication 2 dans lesquels les pores ont une dimension comprise entre 10 µm et 2 mm.

4. Logement selon l'une quelconque des revendications précédentes dans lequel le logement (10) définit un conduit cylindrique (12) avec un alésage à travers lequel un arbre s'étend librement, et définit au moins un siège (16) pour positionner un palier (13) au sein du conduit cylindrique (12), dans lequel au moins une cavité de réservoir (30) est définie au sein de la paroi du conduit cylindrique (12), et dans lequel la voie de communication est fournie par une ouverture communiquant entre la cavité de réservoir (30) et l'alésage du conduit cylindrique (12).

5. Logement selon la revendication 4 dans lequel la cavité interne (30) inclut des structures internes (32) pour inhiber la redistribution rapide d'un lubrifiant liquide, et ces structures internes (32) s'étendent jusqu'à l'ouverture au niveau de l'alésage du conduit cylindrique (12) .

6. Logement selon la revendication 5 dans lequel le conduit cylindrique définit deux sièges de positionnement de palier (16) adjacents aux extrémités opposées du conduit cylindrique (12), et chaque cavité de réservoir interne (30) communique à travers une ouverture avec l'alésage entre les sièges de positionnement de palier (16).

7. Logement selon l'une quelconque des revendications 4 à 6 dans lequel chacune de ces cavités de réservoir (30) est de forme annulaire au sein de la paroi du conduit cylindrique (12), de sorte qu'elle entoure l'alésage et communique avec une ouverture unique s'étendant tout autour de la surface cylindrique de l'alésage.

8. Logement selon l'une quelconque des revendications 4 à 7 aussi doté d'un revêtement sur au moins une partie de la surface de l'alésage, le revêtement modifiant l'énergie de surface de manière à repousser l'huile, de sorte que le revêtement peut agir comme une barrière anti-glissement pour inhiber le glissement de lubrifiant par-dessus cette partie de surface de l'alésage.

9. Logement selon l'une quelconque des revendications 4 à 8 qui définit un siège de montage de palier de précision (16) pour chaque palier (13).

10. Logement selon l'une quelconque des revendications précédentes définissant aussi des éléments de fixation (20) destinés à la rétention de chaque palier (13) dans le logement (10).

11. Logement selon l'une quelconque des revendications précédentes définissant aussi des butées de fixation (14) destinées à fixer le logement (10) aux composants adjacents.

12. Logement selon l'une quelconque des revendications précédentes dans lequel chaque cavité de réservoir (30) est aussi dotée d'un moyen d'entrée (26).

13. Arbre (38) selon l'une quelconque des revendications 1 à 3 aussi doté d'un revêtement sur au moins une partie de la surface de l'arbre, le revêtement modifiant l'énergie de surface de manière à repousser l'huile, de sorte que le revêtement peut agir comme une barrière anti-glissement pour inhiber le glissement de lubrifiant par-dessus cette partie de la surface de l'arbre (38) .
